# EUROPEAN PATENT APPLICATION

(11) **EP 3 896 045 A1**
(43) Date of publication of application: **20.10.2021**
(21) Application number: 20169924.6
(22) Date of filing: 16.04.2020
(51) Int. Cl.: C03C 25/321, C09J 103/02, D04H 1/4209, D04H 1/587, D04H 1/64, C08K 5/5435

(54) **BINDERS AND CURABLE RESINS FOR MINERAL WOOL**

(71) Applicant: URSA Insulation, S.A., 28004 Madrid (ES)
(72) Inventor: CASADO DOMIGUEZ, Arturo Luis, 28860 Paracuellos de Jarama, Madrid (ES); ORTIZ ÁLVAREZ, Alba María, 28803 Alcalá de Henares, Madrid (ES); AZNAR ÉCIJA, Anna, 43004 Tarragona (ES); MOLINERO ARENAS, Alejandro, 28224 Pozuelo de Alarcón, Madrid (ES)
(74) Representative: Zimmermann & Partner Patentanwälte mbB

(57) **Abstract**

Embodiments of a curable formaldehyde-free resin, and a method for the manufacture of the curable formaldehyde-free resin are provided herein. The curable formaldehyde-free resin is provided in the form of an aqueous dispersion. The curable formaldehyde-free resin comprises component a) a reducing sugar, component b) a polycarboxylic acid, component c) one or more polyols having a molecular weight of less than 1000 g/mol, and component d) epoxysilane. The total amount of component c) in the curable formaldehyde-free resin is between 0.5 and 10% wt. with respect to the sum of components a) and b). The amount of component d) is from 0.1% wt. to less than or equal to 2% wt. with respect to the sum of components a) and b). Further, a method for the manufacture of the curable formaldehyde-free resin according to one of the embodiments of the present disclosure is provided.

## Description

### Field of the Invention

Embodiments hereof relate to a curable formaldehyde-free resin in the form of an aqueous dispersion, and a method for the manufacture of the curable formaldehyde-free resin.

### Background of the Invention

Mineral wool products are widely used for the thermal and acoustic insulation of different parts of buildings, transportations, or other appliances, as well as for fire protection. Mineral wool materials are mainly randomly interlaced masses of mineral fibres with varying lengths and usually bound by a resin-based binder. Three types of mineral materials are most commonly employed: glass, stone or slag. Mineral wool is formed by an intricate network of fibres which might be bonded in their cross-over points by different means, e.g. by using a cured binder. Processes for the production of mineral wool products are well known in the art, and usually comprise the steps of melting the mineral material to an adequate temperature, fiberising the molten mixture into fine fibres, application (e.g. spraying) of a binder composition to the individual fibres, collection of the fibres and formation of a primary fleece on a foraminous conveyor, densifying the fleece, and curing the binder at elevated temperatures. The cured mat is then cut to the desired size with transverse and edge trimmers and optionally rolled up, before it is packaged for transport.

The type and amount of binder used to bond the fibres in the mineral wool plays an important role in the final properties of the produced mineral wool. A variety of binder systems have been described in the art, including binders based on melamine urea formaldehyde resins, furane-based resins, and others, but phenol-formaldehyde resin based binders have been preferred for a very long time, due to their good performance and attractive low cost.

Environmental and toxicological concerns related to the formaldehyde released from the products manufactured with phenol-formaldehyde resin based binders have however led to a movement in the mineral wool industry to reduce or completely eliminate the use of such resins, or to reduce the amount of excess formaldehyde they contain.

In this regard, different formaldehyde-free resins have been described in the art, which are claimed to reduce formaldehyde emissions to zero. Some illustrative examples of these alternative resins are a) resins based on the esterification reaction between carboxylated polymers (e.g. acrylic copolymers) and low molecular weight polyfunctional alcohols; b) resins using renewable carbohydrate materials reacted with a low molecular weight polyacid as a crosslinker; c) resins based on the Maillard reaction between a reducing sugar, and acid precursor and a source of nitrogen; and d) starch and its derivatives, due to their large availability at low cost, have also been explored as the renewable component for formaldehyde-free resin based binder compositions.

For example, binders are known from WO 2015/132518 A1, WO 2015/144843 A1, EP 3148951 A1, WO 2009/080938 A2, and WO 2013/021112 A1.

The formaldehyde-free resins previously described in the art have various drawbacks. Many formaldehyde-free resins have poor mechanical properties, particularly in humid conditions (i.e. have a low resistance to degradation). Resistance to weathering and good ageing behaviour are highly relevant factors for the purpose of utilizing formaldehyde-free resins in insulating products. Further drawbacks of some previous formaldehyde-free resins include low solubility in cold water, the instability of its dispersions, an undesirably high viscosity of the solutions obtained after solubilisation (e.g. after gelatinization, hydrolysis, etc.), and high costs of manufacturing.

### Detailed description and preferred embodiments of the invention

Briefly, a curable formaldehyde-free resin, and a method for the manufacture of the curable formaldehyde-free resin are provided to overcome at least some of the abovementioned limitations of prior art formaldehyde-free resins. This object is accomplished by means of a resin according to claim 1, and a method for the manufacture of the resin according to claim 13.

According to an embodiment, a curable formaldehyde-free resin in the form of an aqueous dispersion is provided. The curable formaldehyde-free resin comprises: component a) a reducing sugar, component b) a polycarboxylic acid, component c) one or more polyols having a molecular weight of less than 1000 g/mol, and component d) epoxysilane. The total amount of component c) in the curable formaldehyde-free resin is between 0.5 and 10% wt. with respect to the sum of components a) and b). The amount of component d) is from 0.1% wt. to less than or equal to 2% wt. with respect to the sum of components a) and b).

The resin according to the present disclosure is "curable" and therefore hardens when subjected to elevated heating temperatures. For example, the inventive resin may be cured at above 100 °C in a curing oven. In order for the curable formaldehyde-free resin to function as a binder for mineral wool, a curing step is intended. While not wishing to be bound by theory, it is believed that an esterification reaction between component a) the reducing sugar and component b) the polycarboxylic acid takes place during curing. Moreover, it is also believed that the resin of the invention may also cure by the crosslinking reaction between multiple carboxylic groups of the polycarboxylic acid (component b), and multiple hydroxyl groups in the reducing sugar (component a)) and/or the polyol (component c)). Additionally, and/or alternatively, other curing mechanisms may take place based on chemical or physical interactions among the components.

"Formaldehyde-free" in accordance with the present disclosure is to be understood such that no or essentially no formaldehyde is contained in the resin and no or essentially no formaldehyde is released from the resin or by curing the resin or from a binder or mineral wool product containing the resin. By "essentially no formaldehyde" it is meant that the concentration of formaldehyde in the formaldehyde-free resin is < 0.1 wt.-% relative to sum of the weights of the a), b), c) and d) resin components, more preferably < 0.01 wt.-% or even below a detectable limit of formaldehyde, and even more preferably zero.

The components a), b), c) and d) of the curable formaldehyde-free resin according to the present disclosure contain all the components of this kind in the resin, i.e. all the reducing sugars contained in the resin are contained in component a), all the polycarboxylic acids contained in the resin are contained in component b), all the polyols contained in the resin are contained in component c), and all the epoxysilanes contained in the resin are contained in component d).

Component a) may be selected from monosaccharides, oligosaccharides, polysaccharides and mixtures thereof. Typically, component a) is a mixture of different saccharides, in particular a mixture of monosaccharides, oligosaccharides, and polysaccharides. According to one embodiment, component a) is a dextrin, preferably maltodextrin. The dextrose equivalent (DE) of component a) may be between 11 and 21, preferably between 12 and 20, more preferably between 14 and 19, and even more preferably between 15 and 17. In a preferred embodiment the dextrose equivalent is between 17 and 21. In another preferred embodiment the dextrose equivalent is between 11 and 15. In a more preferred embodiment, the dextrose equivalent is about 12 or 19.

Suitable methods to determine the dextrose equivalent are well known in the art. Particularly, the dextrose equivalent values mentioned in the present disclosure were all measured according to the norm ISO 5377-1994. This norm specifies a Lane and Eynon constant titre method for the determination of reducing power and dextrose equivalent in starch hydrolysis products.

In a particular embodiment, component a) is a maltodextrin having a DE between 11 and 21, preferably a DE of between 11 and 15 or between 17 and 19.

Typically, the curable formaldehyde-free resin comprises component a), and in particular maltodextrin, in the range between 50% and 80% wt. According to one embodiment, the curable formaldehyde-free resin comprises component a), and in particular maltodextrin, in the range between 60% and 70% wt.

The weight percentages disclosed herein are given as relative ratios in wt.-%, unless mentioned otherwise. The sum of all components may also surmount 100% in some embodiments. In numerous examples the relative weight percentages are specified such that the sum of components a) and b) corresponds to 100% for ease of comparison. Throughout this description and in the claims, the weight percentages given for components a) to d) and other optional components are indicated for the compounds as such, in their pure form, excluding any impurities, water or solvents which they might contain, e.g. in their commercially available forms.

Typically, component b) is a saturated aliphatic polycarboxylic acid or anhydride or salt thereof. Illustratively, component b) may be a monomeric polycarboxylic acid. The monomeric polycarboxylic acid may be a dicarboxylic acid or a tricarboxylic acid. In a particular embodiment, the polycarboxylic acid is a C3-C10 polycarboxylic acid comprising at least two carboxylic groups separated by at least 1 carbon atom. Suitable acids include maleic acid, malonic acid, fumaric acid, malic acid, ascorbic acid, succinic acid, adipic acid, glutaric acid, tartaric acid, pimelic acid, suberic acid, azelaic acid, sebacic acid, citric acid, anhydrides and salts thereof, and combinations thereof. In a particular embodiment, component b) may be selected from citric acid, succinic acid, tartaric acid, adipic acid, anhydrides and salts thereof. Component b) may also be a combination of any of citric acid, succinic acid, tartaric acid, adipic acid, anhydrides and salts thereof. According to one embodiment, the polycarboxylic acid is citric acid.

In one particular embodiment, the curable formaldehyde-free resin is characterised in that component a) is maltodextrin and component b) is citric acid. Preferably, the curable formaldehyde-free resin is characterised in that component a) is maltodextrin having a DE between 17 and 19 or having a DE between 11 and 15, and component b) is citric acid.

According to one embodiment, the curable formaldehyde-free resin comprises component b), and in particular citric acid, in the range between 20% and 50% wt, and optionally in the range between 25% and 40% wt.

In a particular embodiment, the curable formaldehyde-free resin comprises from 50 to 80% wt. maltodextrin and from 20 to 50 % wt. citric acid, preferably from 60 to 70 % wt. maltodextrin and from 25 to 40 wt. % citric acid.

Polyols, as described herein, are organic compounds containing at least two hydroxyl groups. Sugars, and in particular reducing sugars, are not polyols according to the present disclosure, (despite comprising multiple hydroxyl groups) as is general knowledge for the person skilled in the art. Sugar alcohols (or hydrogenated sugars), which are commonly derived from sugars, such as for example sorbitol, on the other hand may be regarded as polyols according to the present disclosure. It is believed that the polyol in the formaldehyde-free resin of the present application acts as an agent to improve the cross-linking degree.

In preferred embodiments the polyol has a few hydroxyl groups and a limited carbon chain length. Each of the one or more polyols has a molecular weight of less than 1000 g/mol, preferably of less than 500 g/mol and even more preferably of less than 300 g/mol. In one embodiment the one or more polyols contain no more than five hydroxyl groups, preferably no more than four hydroxyl groups, more preferably three hydroxyl groups. In another embodiment the one or more polyols contain exactly two hydroxyl groups.

In a particular embodiment, the polyol, namely component c) in the formaldehyde-free resin of the invention is an alkylene glycol. In the context of the present invention, alkylene glycols are understood as organic diols with two hydroxyl groups in two different carbon atoms. Preferably, the carbon atoms carrying the hydroxyl groups are vicinal. They can also be described as alcohols derived from ethylene glycol. The term alkylene glycols, as used herein, also includes diols obtained by condensation of ethylene glycol, in which the hydroxy groups are located in non-adjacent carbon atoms. Preferred alkylene glycols are ethylene glycol, propylene glycol, trimethylene glycol (1,3-propane diol), neopentyl glycol, diethylene glycol, triethylene glycol and polyethylene glycol. More preferably, the alkylene glycol is selected from ethylene glycol, propylene glycol and mixtures thereof. Even more preferably, the alkylene glycol is ethylene glycol.

In a preferred embodiment, the polyol, namely component c) in the formaldehyde-free resin of the invention, is selected from ethylene glycol, tetraethylene glycol, 1,4-butanediol, 1,3-butanediol, 1,5 pentanediol, 1,6-hexanediol, glycerol, diglycerol, triglycerol, triethanolamine, diethanolamine, trimethylolpropane, propylene glycol and combinations thereof. More preferably, the polyol is selected from ethylene glycol, tetraethylene glycol, 1,4-butanediol, glycerol, triglycerol, triethanolamine, trimethylolpropane, propylene glycol and combinations thereof. In one embodiment the one or more polyol is ethylene glycol.

The total amount of component c) in the curable formaldehyde-free resin is between 0.5 and 10% wt. with respect to the sum of components a) and b). Surprisingly, the inventors have found that the mechanical properties of the curable formaldehyde-free resin, such as the maximum load value or the maximum slope value, drop dramatically when the total amount of polyols exceeds 10% wt. with respect to the sum of components a) and b). The total amount of polyols in the curable formaldehyde-free resin should therefore be no greater than 10% wt. with respect to the sum of components a) and b).

In one embodiment the total amount of component c) in the curable formaldehyde-free resin is between 1 and 6 % wt. with respect to the sum of components a) and b), preferably between 2 and 5 % wt., and more preferably between 3 and 4 % wt. Alternatively the total amount of component c) in the curable formaldehyde-free resin is between 1 and 2 % wt. with respect to the sum of components a) and b). The range between 1 and 2% exhibits particularly high resistance to weathering and good ageing behaviour.

In preferred embodiments, the epoxysilane is an alcoxy-epoxy-silane, in particular an alcoxy-epoxy-silane selected from tri-methoxy-epoxy-silane, tri-ethoxy-epoxy-silane, isopropoxy-epoxy-silane, tert-butoxy-epoxy-silane, di-methoxy-epoxy-silane or di-ethoxy-epoxy-silane. Illustratively, component d) may be 3-glycidoxypropyltrimethoxysilane, 3-glycidoxyetyltrimethoxysilane, 3-glycidoxymetyltrimethoxysilane, 3-glycidoxypropyltriethoxysilane, 3-glycidoxyetyltriethoxysilane, 3-glycidoxymetyltriethoxysilane or combinations thereof.

The amount of component d) is from 0.1% wt. to equal or less than 2% wt. with respect to the sum of components a) and b). Preferably, the amount of component d) is from 0.1% wt. to less than 2% wt. with respect to the sum of components a) and b). In more preferred embodiments the amount of component d) is from 0.2 % wt. to 1.9 % wt. with respect to the sum of components a) and b), or from 0.3 % wt. to 1.8. In other preferred embodiments, the amount of component d) is from 0.2 % wt. to 1.5 % wt. with respect to the sum of components a) and b), or between 0.4 % wt. and 1 % wt., and more preferably between 0.5 % wt. and 0.8 % wt. Typically, the amount of component d) is from 0.4% wt. to 1.7 % wt. or from 0.6 to 1.3 % wt., and more preferably from 0.7 to 1.1 % wt. or from 0.8 to 1 % wt. or less, with respect to the sum of components a) and b). Alternatively, the amount of component d) may be between 0.2% wt. and 0.5% wt. with respect to the sum of components a) and b). The range between 0.2% and 0.5% may be advantageous for applications requiring particularly high mechanical strength of the curable resin under dry conditions.

The alcoxy group of the alcoxy-epoxy-silane is hydrolysed in contact with the aqueous medium to a hydroxyl group that is able to react with the functional groups of the mineral wool, for example with silanol groups of glass fibre. Further, the epoxy group of the alcoxy-epoxy-silane opens in the aqueous environment, resulting in a silane comprising a hydroxyl group that can act as a crosslinker in the resin.

The epoxy-silane improves the adhesion between the organic resin and the inorganic mineral wool in a curing step, i.e. acts as a "coupling agent". Providing coupling agents as such is known in the art, however, prior art resins are largely based on amino-silane. Amino-silanes are rather inexpensive components that exhibit good chemical stability and have been shown to improve the adhesion of a cured resin compared to no coupling agent being present at all in the curable resin. The inventors discovered that resins comprising epoxy-silane exhibit highly superior mechanical properties in comparison to resins comprising amino-silane. However, epoxy-silane is a rather expensive component. A resin comprising epoxy-silane in an amount of 2.5 % wt., 3% wt. or an even higher amount leads to improved mechanical properties, but results in a product of limited commercial interest, which encouraged the inventors to investigate other options.

The present invention is based on the surprising discovery that by providing a curable resin comprising epoxy-silane and polyols, it is possible to obtain mechanical properties that even surpass those of a curable resin merely containing epoxy-silane, in particular as a "coupling agent" or "adhesion promoter", when the amount of epoxy-silane is limited to below 2% wt. with respect to the sum of components a) and b). While not wishing to be bound by theory, it is believed that the polyols also function as a coupling agent between the inorganic mineral wool and the organic components of the resin in addition to the epoxy-silanes. The epoxysilane in low concentration acts as an adhesion promoter between the fibres and the resin, whereas it is believed that the polyol acts as a crosslinker agent within the resin. The small size of the polyols considered in the composition (having a molecular weight of less than 1000 g/mol) may allow the polyols to act as bridges between the components of the resin. On the other hand, the presence of polyols in an amount according to the present disclosure leads to an improvement of the mechanical properties of the resin. While a higher amount of polyol could lead to a very high crosslinking, the high crosslinking can result in a stiff resin, which is difficult to handle. As mentioned above, another surprising finding of the present invention is that when polyols are provided in a high amount, at a certain point the mechanical properties dramatically degrade, especially under humid (wet) conditions. These findings are in stark contrast to the disclosure of WO 2015/144843 A1, which teaches using a large quantity of epoxy-silane and a large quantity of polyols (hydrogenated sugars). Further, the presence of polyols and epoxy-silane in an amount according to the present disclosure facilitates processing the curable resin. The low solubility of epoxy-silane impedes the processing with increasing weight percentage, requiring even to be pre-reacted in water. In addition, the reactivity of epoxysilane may lead to unwanted reactions difficult to control. Thus, curable resins according to the present disclosure having a moderate amount of epoxysilane, minimise said drawbacks related to the use of epoxysilane.

The advantageous mechanical properties referred to above relate both to a situation after manufacture as well after ageing in environmental humid conditions, i.e. the inventive resins show an enhanced resistance to weathering influences. The mechanical properties of the resins are properties of the resin after a curing step, which however are a direct result of the composition of the curable resin itself. The curing step may be performed in a conventional manner as known to the person skilled in the art.

Yet another advantage of the present invention is the use of components that are natural in origin and/or are derived from renewable sources, thus increasing the recyclability of the resin. For example, component a) (reducing sugar) and, many of the preferred polycarboxylic acids (component b)), e.g. citric acid, are natural in origin, while many of the preferred polyols, e.g. ethylene glycol, glycerol, 1,4-butanediol, 1,3-butanediol etc., may be derived from renewable sources.

The curable formaldehyde-free resin may further contain a catalyst. The catalyst may facilitate and/or accelerate the subsequent curing step. Typical examples of useful catalysts are phosphorous-containing esterification catalysts, like alkali metal hypophosphite salts, alkali metal phosphites, alkali metal polyphosphates, and the like. A preferred catalyst is sodium hypophosphite. The concentration of the catalyst in the formaldehyde-free resin of the invention is preferably greater than 0.1 wt.-% and/or less than 5 wt.-% relative to the sum of the weights of the components a) and b) of the resin, more preferably the concentration of the catalyst is about 3 wt.%. In a particular embodiment, the curable formaldehyde-free resin of the invention contains sodium hypophosphite in an amount of greater than 0.1 wt.-% and less than 5 wt.-% relative to the sum of the weights of the components a) and b) of the resin, preferably in an amount of about 3 wt.%.

The curable formaldehyde-free resin may further contain optional additives. Non-limiting examples of such additives are hydrophobising agents such as silicones and fluorocarbon-polymers, dedusting agents such as paraffin and mineral oils, fibre softeners, preservatives, dyes and/or corrosion inhibitors, among others. The amount of these optional additives in the curable formaldehyde-free resin does not exceed 20 wt.-% and preferably does not exceed 10 wt.-% of the total non-aqueous content of curable formaldehyde-free resin.

The curable formaldehyde-free resin is in the form of an aqueous dispersion, wherein the solid content may be in the range of 10 - 60 %, preferably in the range between 15% and 35%.

In the following, some preferred embodiments of the invention will be summarised:
1) The curable formaldehyde-free resin according to any embodiment disclosed herein, comprising component a) is maltodextrin in the range from 60 to 70 % wt., component b) is citric acid in the range from 25 to 40 % wt., component c) ethylene glycol, and component d) epoxysilane. The amount of ethylene glycol, that is the total amount of polyols, is comprised between 0.5 and 2 % wt. with respect to the sum of maltodextrin and citric acid; and the amount of epoxysilane is from 0.5 % wt. to less than 2 % wt. with respect to the sum of maltodextrin and citric acid. Preferably, the maltodextrin has a DE between 17 and 19.
2) The curable formaldehyde-free resin according to any embodiment disclosed herein, comprising component a) maltodextrin in the range from 60 to 70 % wt., component b) citric acid in the range from 25 to 40 % wt., component c) one or more polyols having a molecular weight of less than 1000 g/mol, and having exactly two hydroxyl groups, and component d) epoxysilane. The total amount of the one or more polyols is comprised between 0.5 and 2 % wt. with respect to the sum of maltodextrin and citric acid, and the amount of epoxysilane is from 0.5 % wt. to less than 2 % wt. with respect to the sum of maltodextrin and citric acid. Preferably, the maltodextrin has a DE between 17 and 19.
3) The curable formaldehyde-free resin according to any embodiment disclosed herein, comprising component a) maltodextrin in the range from 60 to 70 % wt., component b) citric acid in the range from 25 to 40 % wt., component c) ethylene glycol, and component d) epoxysilane. The amount of ethylene glycol, that is the total amount of polyols, is comprised between 0.5 and 2 % wt. with respect to the sum of maltodextrin and citric acid; and the amount of epoxysilane is between 0.1 % wt. and 0.5 % wt. with respect to the sum of maltodextrin and citric acid. Preferably, the maltodextrin has a DE between 17 and 19.
4) The curable formaldehyde-free resin according to any embodiment disclosed herein, comprising component a) maltodextrin in the range from 60 to 70 % wt., component b) citric acid in the range from 25 to 40 % wt., component c) one or more polyols having a molecular weight of less than 1000 g/mol, and having exactly two hydroxyl groups, and component d) epoxysilane. The total amount of the one or more polyols is comprised between 0.5 and 2 % wt. with respect to the sum of maltodextrin and citric acid, and the amount of epoxysilane is between 0.1 % wt. and 0.5 % wt. with respect to the sum of maltodextrin and citric acid. Preferably, the maltodextrin has a DE between 17 and 19.

In one aspect a binder for mineral wool comprising the curable formaldehyde-free resin according to the present disclosure, is provided. The binder comprises the curable formaldehyde-free resin according to any of the embodiments of the present disclosure. Thus, the binder comprising the curable formaldehyde-free resin of the invention may be cured at temperature above 100 °C. The binder of the invention may be a formaldehyde-free aqueous binder. Typically, the binder contains the resin in a diluted form, i.e. contains the resin and additional water.

In a preferred embodiment, in addition to the resin, other additives described in the art might be incorporated for the preparation of the inventive binder. Those additives are intended either to assist in the manufacture of mineral wool products, or to improve the properties of the manufactured products. Non-limiting examples of such additives are hydrophobising agents such as silicones and fluorocarbon-polymers, dedusting agents such as paraffin and mineral oils, fibre softeners, preservatives, dyes and/or corrosion inhibitors, among others. The amount of these optional additives in the inventive binder does not exceed 20 wt.-% and preferably does not exceed 10 wt.-% of the total non-aqueous content of the binder. In a suitable embodiment, the inventive binder composition might also comprise at least one filler or resin extender such as urea, sugars, molasses, lignosulfonates or tannins. Resin extenders are compounds added to resin compositions to "extend" the resin, thereby reducing the resin usage and reducing the total resin cost, and which, up to a certain concentration, do not deteriorate unacceptably the final resin properties. The amount of optional filler and/or resin extender in the inventive binder does not exceed 20 wt.-% and preferably does not exceed 10 wt.-% of the total non-aqueous content of the binder. The time from the moment the binder additives are contacted with the resin until the binder is applied to the mineral fibres usually ranges from 1 to 5 minutes. It is also possible, according to an embodiment, that these additives, provided they do not compromise the stability, might as well be incorporated already in the curable resin, before the binder is prepared. It is also preferred that the total amount of optional additives plus filler or resin extender in the inventive binder is no more than 30 wt.-% of the total non-aqueous content of the binder, and even more preferably no more than 20 wt.-%.

Based on the curable resins of the present disclosure, binders with suitable properties for the use in mineral wool products are obtained. In particular, the viscosity of said binders is reduced and thus, they are suitable for application with mineral wool.

Another aspect of the invention is directed to a mineral wool product comprising mineral fibres and a cured binder. The cured binder is obtained by curing the binder according to any of the embodiments of the present disclosure at temperatures higher than 100°C.

The inventive mineral wool products can be used for instance in the thermal and acoustic insulation of buildings, transportations or appliances, or for fire protection, as well as for other non-insulation applications.

One aspect of the invention refers to a method for the manufacture of the curable formaldehyde-free resin according to one of the embodiments of the present disclosure. The method comprises a step wherein component c) and component d) are premixed. In a preferred embodiment the polycarboxylic acid is added to water under mechanical stirring. Then, the premixed components c) and d) are added to the aqueous mixture, under continuous stirring. Subsequently, the reducing sugar may be added to the aqueous mixture, and the stirring continues until the components are dissolved.

The method for the manufacture of the curable formaldehyde-free resin according to the invention is preferably carried out at room temperature that is at a temperature between 20 and 25 ° C, preferably at 25 ° C.

The present disclosure is directed to the use of a curable formaldehyde-free resin according to any of the embodiments of the present disclosure for the production of a mineral wool product.

The mineral wool product can be manufactured by applying the binder of the invention to the individual mineral fibres after fiberisation, while the fibres still retain some residual heat. Preferably, the binder is applied to the mineral fibres by spraying. The impregnated fibres are then collected on a foraminous conveyor in a forming chamber, where a primary un-cured mat is formed. A significant part of the water comprised in the binder is evaporated at this stage. Due to the specific composition of the resins of the invention, the viscosity of the inventive resin and binder is particularly low. This allows first that the binder can be distributed more homogenously on the fibres, and second, that it can more efficiently flow to the intersections of the fibres in the mat before it is cured. This produces mineral wool products with better properties.

The binder is preferably applied in an amount to produce a solid binder content in the final product after drying and curing between 3-12 wt.-%, relative to the weight of the mineral wool product. This amount of cured binder is measured as LOI (loss on ignition) according to ISO 29771:2008.

After the fibres have been impregnated and the primary mat is formed, the inventive binder is cured at temperatures above 100°C, preferably at a temperature between 140-180°C. The curing time preferably ranges from 3-5 min. The cured mineral wool mat is afterwards trimmed and shaped into its final dimensions, optionally rolled up, and packaged. Additional facing layers like paper, aluminum, glass veil or mixtures thereof might also be applied to the mineral wool depending on its intended application.

It is to be understood that other embodiments may be utilised, and structural or logical changes may be made without departing from the scope of the present invention. The description, therefore, is not to be taken in a limiting sense, and the scope of the present invention is defined by the appended claims. The embodiments being described use specific language, which should not be construed as limiting the scope of the appended claims.

### Examples

Different inventive and comparative examples of resins are described in this section and contained in Tables 1 to 9. These examples are included to help to describe the invention, but they are not intended to be limiting.

The mechanical properties disclosed herein are measured for the resins after curing. However, the advantageous properties of the cured resins demonstrated herein are a direct result of the composition of the curable resin itself. The curing step is performed in a conventional manner as known to the person skilled in the art.

In Tables 1, 4 and 7, the amounts are given as relative ratios in wt.-%. For ease of comparison the relative weights are given such that the sum of component a) and the component b) amounts to 100.

The raw materials used in the examples are:
- Component a): Maltodextrin having a DE of 19,and supplied by Roquette ;
- Component b): Citric acid supplied by Citrique Beige;
- Component c): Ethylene glycol (2 primary OH-groups), Tetraethylene glycol (2 primary OH-groups), 1,4-Butanediol (2 primary OH-groups), Glycerol (2 primary OH-groups and 1 secondary OH-group), Triglycerol (2 primary OH-groups and 3 secondary OH-groups), Triethanolamine (3 primary OH-groups), Trimethylpropane (3 primary OH-groups), supplied by Sigma-Aldrich.
- Component d): the "Epoxysilane" used was (3-Glycidyloxypropyl)trimethoxysilane (CAS Number: 2530-83-8), supplied by supplied by Onichem Europe Limited.
- Additional components: Sodium hypophosphite, supplied by SMC Global.

Experiments were also carried out for component d) being an aminosilane. The mechanical properties resulting from applying aminosilane based fibres to materials and subsequent curing were highly inferior compared to those resins containing an epoxysilane.

Different curable resins are prepared at room temperature following this general procedure. The citric acid is added to water under mechanical stirring. Following this step, the premixed epoxysilane and polyol are added to the aqueous mixture, under continuous stirring. Subsequently, the reducing sugar is incorporated to the aqueous mixture, and the stirring continued until the components are dissolved. The curable resins obtained by this process are in form of transparent, low viscosity water dispersions.

The curable resins are obtained with approximately the following solid contents.
- Examples 1 to 8 (Table 1) and Examples 18 to 21 (Table 7): solid content of 25%;
- Examples 9 to 17 (Table 4): solid content of 20%.

The curable resins are then applied to a material and subsequently cured. The material, the details for application of the binder to the material and the curing parameters are presented in a separate section dedicated to the examples of Tables 1, 4 and 7.

The following mechanical properties are measured in the experiments: Maximum Load (given in units of N), Young's Modulus (in units of N/mm²), and Maximum Slope (given in units of N/mm). Details of experimental procedure for evaluating the mechanical properties are presented in a separate section dedicated to the examples of Tables 1, 4 and 7. For every example presented herein, the mechanical properties were evaluated under two different experimental conditions, namely "dry conditions", i.e. measured just after preparation of the samples, and "wet conditions", i.e. the samples were subjected to temperatures of 50°C and a relative humidity of 95% for one week in a climate chamber. Measurements under "wet conditions" enable the assessment of a products capability to resist weathering influences, i.e. to assess the deterioration of the mechanical properties during ageing in environmental humid conditions.

### Examples 1 to 9

The curable resins of examples 1 to 8 were applied to glass microspheres. This type of experiment is a particularly challenging test for the mechanical properties of the curable resins as the glass microspheres are not united and the mechanical properties drop dramatically in the event of poor cohesion.

300 g of glass microspheres with an average diameter of 100-200 µm supplied by Abrasivos y Maquinaria S.A. are mixed with 60g of the curable resin (having a solid content of approximately 25%).

Subsequently the mixture is poured into stainless steel molds to produce specimens with the dimensions 81 mm x 22 mm x 7 mm. This specimen is cured at 200°C for 25 minutes in a ventilated oven (Mathis oven: Lab-dryer/coater type LTE/H-(TSM)). Half of this specimen is used to investigate the mechanical properties under "dry conditions" and the other half is used for "wet conditions".

The mechanical properties of the samples are examined by means of a tensiometer Instron 3367 by gradually applying a pulling force to each sample at a constant pulling rate of 5 mm/min. The resulting deformation of each sample subjected to stretching and the pulling force applied are both recorded. The strain-stress curve is obtained from the recorded deformation and the applied force. The examples 1 to 8 are characterised by determining the maximum load value (the maximum mechanical bonding strength) of the strain-stress curve and the maximum slope of the stress-strain curve.

Examples 1, and 2 are comparative examples either lacking one of the essential components according to embodiments of the present disclosure or with weight ratios outside the ranges of the embodiments. Examples 3 to 8 are curable resins according to embodiments of the present disclosure. Examples 2 to 8 were prepared with component c) being ethylene glycol.

The components and respective relative weight ratios are presented in Table 1 for Examples 1 to 8. Table 2 summarises the maximum load values obtained for examples 1 to 8 both under "dry conditions" as well as under "wet conditions". Table 3 summarises the maximum slope values obtained for examples 1 to 8 both under "dry conditions" as well as under "wet conditions".

**TABLE 1:**

| Component | Ex. 1* (wt.-%) | Ex. 2* (wt.-%) | Ex. 3 (wt.-%) | Ex. 4 (wt.-%) | Ex. 5 (wt.-%) | Ex. 6 (wt.-%) | Ex. 7 (wt.-%) | Ex. 8 (wt.-%) |
|---|---|---|---|---|---|---|---|---|
| Maltodextrin | 70.0 | 70.0 | 70.0 | 70.0 | 70.0 | 70.0 | 70.0 | 70.0 |
| Citric acid | 30.0 | 30.0 | 30.0 | 30.0 | 30.0 | 30.0 | 30.0 | 30.0 |
| Sodium hypophosphite | 3.0 | 3.0 | 3.0 | 3.0 | 3.0 | 3.0 | 3.0 | 3.0 |
| Epoxy-silane | 0.0 | 5.0 | 0.1 | 0.2 | 0.5 | 0.5 | 1.0 | 2.0 |
| Ethylene glycol | 0.0 | 20.0 | 10.0 | 5.0 | 2.0 | 5.0 | 1.0 | 0.5 |

| | | | | | | | | |
|---|---|---|---|---|---|---|---|---|
| * Comparative example. | | | | | | | | |

In the following, reference is made to the maximum load values presented in Table 2. Examples 3 to 8 all result in high maximum load values under dry conditions. Comparative example 1 leads to slightly inferior maximum load values under dry conditions compared to examples 3 to 8, whereas comparative example 2 results in maximum load values comparable to some of examples 3 to 8 under dry conditions. The best results under dry conditions are obtained for examples 3 and 4, both comprising an amount of epoxysilane of no more than 0.5 % wt. with respect to the sum of components a) and b).

The difference between examples 3 to 8 and the comparative examples is striking under wet conditions. Comparative example 1, which does not contain any epoxy-silane, exhibits very low maximum load values, i.e. the mechanical properties worsen significantly in the absence of epoxy-silanes and thus fail in cohesion of the glass microspheres. The epoxy-silane has a clear positive effect in maintaining adhesion under accelerated humidity and temperature aging conditions. Comparative example 2 also shows significantly inferior maximum load values under "wet conditions". The maximum load values for all of examples 3 to 8 exceed those of comparative example 2 by more than 50 %. The best results under "wet conditions" are obtained for examples 7 and 8, both comprising an amount of component c) of no more than 2 % wt. with respect to the sum of components a) and b).

**TABLE 2:**

| Maximum Load (N) | Ex. 1* | Ex. 2* | Ex. 3 | Ex.4 | Ex.5 | Ex.6 | Ex.7 | Ex. 8 |
|---|---|---|---|---|---|---|---|---|
| Dry | 577 | 738 | 756 | 747 | 598 | 577 | 595 | 647 |
| Wet | 31 | 185 | 308 | 284 | 310 | 316 | 368 | 379 |

In the following, reference is made to the maximum slope values presented in Table 3. Examples 3 to 8 all result in high maximum slope values under dry conditions. Comparative example 1 leads to slightly inferior maximum load values under dry conditions compared to examples 3 to 8, whereas comparative example 2 results in maximum load values comparable to some of Examples 3 to 8 under dry conditions.

Under wet conditions, the difference between examples 3 to 8 and the comparative examples again is striking. Comparative example 1, which does not contain any epoxy-silane, exhibits very low maximum slope values, i.e. the mechanical properties worsen dramatically in the absence of epoxy-silanes and thus fail in adhering the glass microspheres. Comparative example 2 also shows significantly inferior maximum slope values under "wet conditions".

**TABLE 3:**

| Maximum Slope (N/mm) | Ex. 1* | Ex. 2* | Ex. 3 | Ex. 4 | Ex. 5 | Ex. 6 | Ex. 7 | Ex. 8 |
|---|---|---|---|---|---|---|---|---|
| Dry | 1313 | 1702 | 1813 | 1496 | 1450 | 1382 | 1695 | 1372 |
| Wet | 41 | 444 | 691 | 630 | 819 | 816 | 712 | 915 |

### Examples 9 to 17

The curable resins of examples 9 to 17 were applied to glass paper at a laboratory scale.

A piece of 21x14.85 cm of a borosilicate GF/A filter paper: 20.3 x 25.4 cm, Cat No. 1820 866, Whatman International Ltd., Maidstone, England is dipped in 100g of the curable resin (having a solid content of approximately 20%) for 1 minute. The impregnated glass paper is subsequently passed through a calendar roller (pressure between rollers 2.5 bar and roller rate 2.5 m/min). The sample exiting from the calendar roller is subsequently dried and cured at 170 °C for 3 minutes in a ventilated oven. The sample is then divided into 12 pieces of 25 mm x 75 mm. Six of the pieces are used to investigate the mechanical properties under "dry conditions" and the other six are used to test under "wet conditions".

The mechanical properties of the samples are examined by means of a tensiometer Instron 3367 by gradually applying a pulling force to each sample at a constant pulling rate of 10 mm/min. The resulting deformation of each sample subjected to stretching and the pulling force applied are both recorded. The strain-stress curve of each individual sample is obtained from the recorded deformation and the applied force. The examples 10 to 16 are characterised by determining the maximum load value (the maximum mechanical bonding strength) of the strain-stress curve and the Young's modulus of the stress-strain curve.

Examples 9 is a comparative example lacking components c) and d). Example 10 is a comparative example lacking component c). Examples 11 to 17 all correspond to inventive embodiments of the curable resins. The relative weight ratios are identical in all of examples 11 to 17, whereas each of Examples 11 to 17 contains a different component c).

The components and respective relative weight ratios are presented in Table 4 for Examples 9 to 17. Table 5 summarises the maximum load values obtained for examples 9 to 17 both under "dry conditions" as well as under "wet conditions". Table 6 summarises the Young's modulus values obtained for examples 9 to 17 both under "dry conditions" as well as under "wet conditions".

**TABLE 4:**

| Component | Ex. 9* (wt.-%) | Ex. 10* (wt.-%) | Ex. 11 (wt.-%) | Ex. 12 (wt.-%) | Ex. 13 (wt.-%) | Ex. 14 (wt.-%) | Ex. 15 (wt.-%) | Ex. 16 (wt.-%) | Ex. 17 (wt.-%) |
|---|---|---|---|---|---|---|---|---|---|
| Maltodextrin | 60.0 | 60.0 | 60.0 | 60.0 | 60.0 | 60.0 | 60.0 | 60.0 | 60.0 |
| Citric acid | 40.0 | 40.0 | 40.0 | 40.0 | 40.0 | 40.0 | 40.0 | 40.0 | 40.0 |
| Sodium hypophosphite | 3.0 | 3.0 | 3.0 | 3.0 | 3.0 | 3.0 | 3.0 | 3.0 | 3.0 |
| Epoxy-silane | 0.0 | 2.5 | 0.5 | 0.5 | 0.5 | 0.5 | 0.5 | 0.5 | 0.5 |
| Ethylene glycol | - | - | 2.0 | - | - | - | - | - | - |
| Tetraethylene glycol | - | - | - | 2.0 | - | - | - | - | - |
| 1,4-Butanediol | - | - | - | - | 2.0 | - | - | - | - |
| Glycerol | - | - | - | - | - | 2.0 | - | - | - |
| Triglycerol | - | - | - | - | - | - | 2.0 | - | - |
| Triethanolamine | - | - | - | - | - | - | - | 2.0 | - |
| Trimethylpropane | - | - | - | - | - | - | - | - | 2.0 |

| | | | | | | | | | |
|---|---|---|---|---|---|---|---|---|---|
| * Comparative example | | | | | | | | | |

In the following, reference is made to the maximum load values presented in Table 5. The maximum load values are significantly improved for the inventive examples 11 to 17 compared to comparative example 9, both under "dry conditions" as well as under "wet conditions". Further, the inventive examples show an increase in the maximum load under dry conditions with respect to comparable example 10, i.e. an improvement over a curable resin not comprising polyols and a high amount of epoxy-silane. The highest maximum load values are obtained for Examples 11 to 13. In Examples 11 to 13 polyols containing 2 OH groups are employed, whereas Examples 14 to 17 comprise polyols with more than 2 OH groups.

**TABLE 5:**

| Maximum Load (N) | Ex. 9* | Ex. 10* | Ex. 11 | Ex. 12 | Ex. 13 | Ex. 14 | Ex. 15 | Ex. 16 | Ex. 17 |
|---|---|---|---|---|---|---|---|---|---|
| Dry | 36 | 41 | 45 | 50 | 45 | 39 | 44 | 41 | 43 |
| Wet | 33 | 40 | 42 | 49 | 39 | 35 | 35 | 40 | 35 |

In the following, reference is made to the Young's modulus values presented in Table 6. The inventive examples also show an increased Young's Modulus compared to non-inventive example 10, i.e. an improvement over a curable resin not comprising polyols and a high amount of epoxy-silane.

**TABLE 6:**

| Young's Modulus (N/mm²₎ | Ex. 9* | Ex. 10* | Ex. 11 | Ex. 12 | Ex. 13 | Ex. 14 | Ex. 15 | Ex. 16 | Ex. 17 |
|---|---|---|---|---|---|---|---|---|---|
| Dry | 426 | 381 | 456 | 493 | 455 | 412 | 428 | 486 | 457 |
| Wet | 585 | 506 | 579 | 652 | 551 | 500 | 511 | 552 | 435 |

### Examples 18 to 21

The curable resins of examples 18 to 21 were applied to glass microspheres. The experimental details, i.e. preparation of the microspheres, producing the specimen, curing, examination of the mechanical properties, is carried out in the same manner as described above pertaining to examples 1 to 8.

Example 18 is a comparative example lacking components c) and d). Examples 19 to 21 all correspond to inventive embodiments of the curable resins. The relative weight ratios are identical in all of examples 19 to 21, whereas each of Examples 19 to 21 contains a different component c).

The components and respective relative weight ratios are presented in Table 7 for Examples 18 to 21. Table 8 summarises the maximum load values obtained for examples 18 to 21 both under "dry conditions" as well as under "wet conditions". Table 3 summarises the maximum slope values obtained for examples 18 to 21 both under "dry conditions" as well as under "wet conditions".

**TABLE 7:**

| Component | Ex. 18* (wt.-%) | Ex. 19 (wt.-%) | Ex. 20 (wt.-%) | Ex. 21 (wt.-%) |
|---|---|---|---|---|
| Maltodextrin | 60.0 | 60.0 | 60.0 | 60.0 |
| Citric acid | 40.0 | 40.0 | 40.0 | 40.0 |
| Sodium hypophosphite | 3.0 | 3.0 | 3.0 | 3.0 |
| Epoxy-silane | 0.0 | 0.5 | 0.5 | 0.5 |
| Ethylene glycol | - | 2.0 | - | - |
| Tetraethylene glycol | - | - | 2.0 | - |
| 1,4-Butanediol | - | - | - | 2.0 |

| | | | | |
|---|---|---|---|---|
| * Comparative example | | | | |

In the following, reference is made to the maximum load values presented in Table 8. Examples 19 to 21 all result in high maximum load values under "dry conditions" and under "wet conditions". Comparative example 18 leads to inferior maximum load values under dry conditions compared to the inventive examples, which is even more striking under "wet conditions".

**TABLE 8:**

| Maximum Load (N) | Ex. 18* | Ex. 19 | Ex. 20 | Ex. 21 |
|---|---|---|---|---|
| Dry | 676 | 818 | 835 | 870 |
| Wet | 392 | 856 | 879 | 939 |

In the following, reference is made to the maximum slope values presented in Table 9. Inventive examples 19 to 21 all result in high maximum slope values under dry conditions. Comparative example 18 results in maximum slope values comparable to some of Examples 19 to 21 under dry conditions. The difference between the inventive examples and the comparative example is striking under wet conditions. Comparative example 18, which does not contain any epoxy-silane, exhibits very low maximum slope values under wet conditions, i.e. the mechanical properties worsen significantly in the absence of epoxy-silanes and thus fail in adhering the glass microspheres. The epoxy-silane has a clear positive effect in maintaining adhesion under accelerated humidity and temperature aging conditions. The best result under "wet conditions" is obtained for component c) being ethylene glycol (Example 18).

**TABLE 9:**

| Maximum Slope (N/mm) | Ex. 18* | Ex. 19 | Ex. 20 | Ex. 21 |
|---|---|---|---|---|
| Dry | 1701 | 1399 | 1582 | 1425 |
| Wet | 1041 | 1628 | 1183 | 1322 |

## Claims

1. A curable formaldehyde-free resin in the form of an aqueous dispersion, comprising:
component a) a reducing sugar,
component b) a polycarboxylic acid,
component c) one or more polyols having a molecular weight of less than 1000 g/mol, and
component d) epoxysilane,
wherein the total amount of component c) in the curable formaldehyde-free resin is between 0.5 and 10% wt. with respect to the sum of components a) and b), and wherein the amount of component d) is from 0.1% wt. to less than or equal to 2% wt. with respect to the sum of components a) and b).

2. The curable formaldehyde-free resin according to claim 1, **characterized in that** component a) is selected from monosaccharides, oligosaccharides, polysaccharides and mixtures thereof.

3. The curable formaldehyde-free resin according to claim 1 or 2, **characterized in that** component a) is a dextrin, preferably a maltodextrin having a DE between 11 and 21.

4. The curable formaldehyde-free resin according to any of previous claims, **characterized in that** component b) is selected from citric acid, succinic acid, tartaric acid, adipic acid, anhydrides and salts thereof, and combinations thereof, preferably, the polycarboxylic acid is citric acid.

5. The curable formaldehyde-free resin according to any of previous claims, **characterized in that** component a) is a maltodextrin having a DE between 17 and 19 and component b) is citric acid.

6. The curable formaldehyde-free resin according to any of the previous claims, comprising from 50 to 80% wt. maltodextrin and from 20 to 50 % wt. citric acid, preferably from 60 to 70 % wt. maltodextrin and from 25 to 40 wt. % citric acid.

7. The curable formaldehyde-free resin according to any of the previous claims, **characterized in that** the component c) is selected from ethylene glycol, tetraethylene glycol, 1,4-butanediol, 1,3-butanediol, 1,5 pentanediol, 1,6-hexanediol, glycerol, diglycerol, triglycerol, triethanolamine, diethanolamine, trimethylolpropane, propylene glycol and combinations thereof, preferably the polyol is ethylene glycol.

8. The curable formaldehyde-free resin according to any of the previous claims, **characterized in that** the total amount of component c) in the curable formaldehyde-free resin is between 1 and 6 % wt. with respect to the sum of components a) and b), preferably between 2 and 5 % wt., more preferably between 3 and 4 % wt.

9. The curable formaldehyde-free resin according to any of the previous claims, **characterized in that** the total amount of component c) in the curable formaldehyde-free resin is between 1 and 2 % wt. with respect to the sum of components a) and b).

10. The curable formaldehyde-free resin according to any of the previous claims, **characterized in that** the amount of component d) is from 0.1 % wt. to less than 2 % wt. with respect to the sum of components a) and b), preferably from 0.2 % wt. to 1.5 % wt. or between 0.4 % wt. and 1 % wt., and more preferably between 0.5 % wt. and 0.8 % wt.

11. The curable formaldehyde-free resin according to any of the previous claims, **characterized in that** the amount of component d) is comprised between 0.2 and 0.5 % wt. with respect to the sum of components a) and b).

12. The curable formaldehyde-free resin according to claim 1, **characterized in that** said resin comprises:
component a) from 60 to 70 % wt. maltodextrin having a DE between 17 and 19,
component b) from 25 to 40 % wt. citric acid,
component c) ethylene glycol, and
component d) epoxysilane,
**characterized in that** the amount of ethylene glycol is comprised between 0.5 and 2 % wt. with respect to the sum of maltodextrin and citric acid, and
that the amount of epoxysilane is from 0.5 % wt. to less than 2 % wt. with respect to the sum of maltodextrin and citric acid.

13. A method for the manufacture of the curable formaldehyde-free resin according to any of claims 1 to 12, comprising a step wherein component c) and component d) are premixed.

14. A binder for mineral wool comprising the curable formaldehyde-free resin according to any of claims 1 to 12.

15. A mineral wool product comprising mineral fibres and a cured binder, wherein the cured binder is obtained by curing the binder according to claim 14 at temperatures higher than 100°C.
